# EUROPEAN PATENT APPLICATION

(11) **EP 4 099 478 A2**
(43) Date of publication of application: **07.12.2022**
(21) Application number: 22176419.4
(22) Date of filing: 31.05.2022
(51) Int. Cl.: H01M 10/613, H01M 10/623, H01M 10/655, H01M 50/247, H01M 50/284, A24F 40/40

(54) **BATTERY ASSEMBLY FOR ELECTRONIC ATOMIZATION DEVICE AND ELECTRONIC ATOMIZATION DEVICE**

(30) Priority: 01.06.2021 CN 202110609747
(71) Applicant: Shenzhen Smoore Technology Limited, Shenzhen, Guangdong 518102 (CN)
(72) Inventor: LIANG, Zhijia, Shenzhen, 518102 (CN); XIE, Zhengjun, Shenzhen, 518102 (CN); MING, Zhinan, Shenzhen, 518102 (CN); LI, Jun, Shenzhen, 518102 (CN); ZENG, Zhaohuan, Shenzhen, 518102 (CN); SHEN, Pifa, Shenzhen, 518102 (CN)
(74) Representative: De Arpe Tejero, Manuel

(57) **Abstract**

The present disclosure provides a battery assembly (300). The battery assembly (300) is configured for an electronic atomization device (100) and includes a cell (11), a connection element (12), a circuit board (10), and a heat-insulating structure. The circuit board (10) is electrically connected to the cell (11) by a connection element (12). The heat-insulating structure is disposed around the circuit board (10), and is configured to insulate the cell (11) from heat generated by the circuit board (10). In this way, the heat transferred from the circuit board (10) to the cell (11) may be reduced, such that an ambient temperature of a surface of the cell (11) is lower than a specification temperature, thus a charge speed is not affected. An electronic atomization device (100) is also provided by the present disclosure.

## Description

### TECHNICAL FIELD

The present disclosure relates to the field of electronic atomization devices, and in particular, to a battery assembly for an electronic atomization device and an electronic atomization device.

### BACKGROUND

In an electronic atomization device of related art, charge and discharge currents of a cell are small, low heat is produced by the cell during use, and a detection requirement for a temperature of the cell and a requirement for an ambient temperature of the cell are not high.

A charge speed of an electronic atomization device is slow, and it generally takes more than an hour to be fully charged. Therefore, a demand for a fast charging technology of the cell is becoming stronger and stronger. Due to a large charge current of the fast charging technology of the cell, heat generated by the atomization device during charging is large. However, a usage specification of the cell requires that the ambient temperature is less than 45°C. In an original structural scheme, heat generated by a circuit board assembly is large, and the heat generated by the circuit board assembly may not be quickly dissipated, resulting in an excessively high ambient temperature inside the cell. In this case, the charge current is reduced or ended due to the excessively high temperature, thereby affecting the use of the fast charging function.

### SUMMARY

A technical solution adopted by the present disclosure is to provide a battery assembly configured for an electronic atomization device, including: a cell; a connection element; a circuit board, electrically connected to the cell by a connection element; and a heat-insulating structure, disposed around the circuit board. The heat-insulating structure is configured to insulate the cell from heat generated by the circuit board.

In some embodiments, the heat-insulating structure covers at least two opposite surfaces of the circuit board, or surrounds the circuit board by around an axial direction of the battery assembly.

In some embodiments, the battery assembly further includes a bracket and a sealing cover, and the bracket and the sealing cover cooperatively form the heat-insulating structure.

In some embodiments, the bracket includes a first accommodating groove, the circuit board is located in the first accommodating groove, and the sealing cover covers the first accommodating groove to form the heat-insulating structure.

In some embodiments, the first accommodating groove includes a blind groove. The bracket further includes a second accommodating groove spaced apart from the first accommodating groove, and a common sidewall is arranged between the first accommodating groove and the second accommodating groove. The cell is located in the second accommodating groove.

In some embodiments, the sealing cover is located on a side of the circuit board away from the bottom of the first accommodating groove, and covers an entire port of the first accommodating groove, so as to completely insulate the circuit board from the cell.

In some embodiments, the battery assembly further includes: a silicone cover, located in the first accommodating groove, and located between the circuit board. The silicone cover, the circuit board, and the sealing cover cooperatively form the heat-insulating structure.

In some embodiments, the first accommodating groove includes a bottom wall and an annular sidewall. The annular sidewall includes a first sidewall and a second sidewall disposed opposite to each other, and the first sidewall is disposed close to the second accommodating groove.

In some embodiments, the heat-insulating structure is cooperatively formed by the sealing cover, the bottom wall, the first sidewall, and the second sidewall. Alternatively, the heat-insulating structure is cooperatively formed by the bottom wall, the first sidewall, and the second sidewall in cooperation with the silicone cover and the sealing cover.

In embodiments, the silicone cover is configured to cover the circuit board, and a thickness of the silicone cover is equal to a distance between the circuit board and the sealing cover.

In some embodiments, the common sidewall defines an opening, and the connection element is a wire. One end of the wire is electrically connected to the cell, and the other end of the wire passes through the opening and is electrically connected to the circuit board.

In some embodiments, a cross-sectional area of the opening is less than 30% of a cross-sectional area of the cell.

In some embodiments, heat produced by part of the circuit board close to the opening is less than heat produced by the other part of the circuit board away from the opening.

In some embodiments, the connection element is a metal dome embedded in a sidewall of the bracket. One end of the metal dome extends into the first accommodating groove and is electrically connected to the circuit board, and the other end of the metal dome extends out of the first accommodating groove and is electrically connected to the cell.

Another technical solution adopted by the present disclosure is to provide an electronic atomization device, including: an atomizer; and a battery assembly as described above, configured to power the atomizer.

Different from the related art, the battery assembly and the electronic atomization device of the present disclosure have the beneficial effects: in the battery assembly, the circuit board is insulated from the cell by arranging the heat-insulating structure around the circuit board, so as to reduce the heat transferred from the circuit board to the cell, such that the ambient temperature of the surface of the cell is lower than the specification temperature, thus the charge speed is not affected.

### BRIEF DESCRIPTION OF THE DRAWINGS

To describe the technical solutions in the embodiments of the present disclosure more clearly, the drawings used for the description of the embodiments will be briefly described below. Apparently, the described drawings are only some embodiments of the present disclosure. Those of ordinary skills in the art can acquire other drawings based on the principle of these drawings without creative efforts.
FIG. 1 is a structural schematic diagram of a first embodiment of a battery assembly according to the present disclosure.
FIG. 2 is a cross-sectional view of the embodiment of the battery assembly shown in FIG. 1 along an A-A direction.
FIG. 3 is a cross-sectional view of a second embodiment of the battery assembly shown in FIG. 1 along the A-A direction.
FIG. 4 is a structural schematic diagram of an embodiment of an electronic atomization device according to the present disclosure.

### DETAILED DESCRIPTION

The technical solutions in the embodiments of the present disclosure will be clearly and completely described below in conjunction with the accompanying drawings in the embodiments of the present disclosure. Apparently, the described embodiments are only a part of the embodiments of the present disclosure, not all of them. Based on the embodiments in the present disclosure, other embodiments obtained by a person of ordinary skill in the art without creative efforts shall fall within the scope of the present disclosure.

The terms "first", "second", and "third" in the present disclosure are intended for descriptive purposes and are not to be construed as indicating or implying relative importance or implicitly specifying the number of indicated technical features. Therefore, a feature qualified with "first", "second", or "third" may either explicitly or implicitly indicate that at least one such feature is included. In the description of the present disclosure, "a plurality of' means at least two, e.g., two, three, etc., unless otherwise expressly and specifically limited. All directional indications (e.g., up, down, left, right, forward, backward, ...) in the embodiments of the present disclosure are intended only to explain the relative position relationship, movement, etc., between assemblies in a particular posture (as shown in the accompanying drawings). When the particular posture is changed, the directional indications are changed accordingly. In addition, the terms "include" and "have" and any variant thereof are intended to cover non-exclusive inclusion. For example, a process, method, system, product, or apparatus including a series of steps or units is not limited to the listed steps or units, but optionally also includes steps or units not listed, or optionally also includes other steps or units inherent to the process, method, product, or apparatus.

References herein to "embodiments" mean that particular features, structures, or characteristics described in connection with an embodiment may be included in at least one embodiment of the present disclosure. The presence of the phrase at various points in the specification does not necessarily mean a same embodiment, nor is it a separate or alternative embodiment that is mutually exclusive with other embodiments. It is understood, both explicitly and implicitly, by those skilled in the art that the embodiments described herein may be combined with other embodiments.

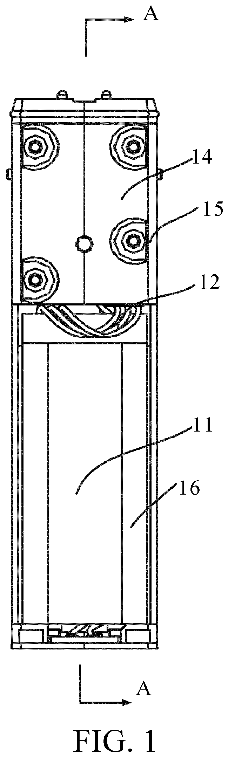

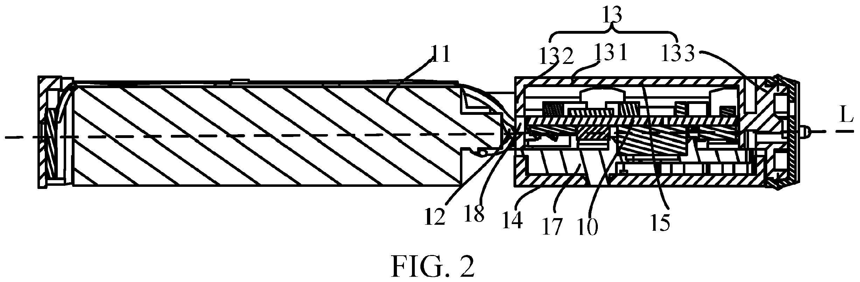

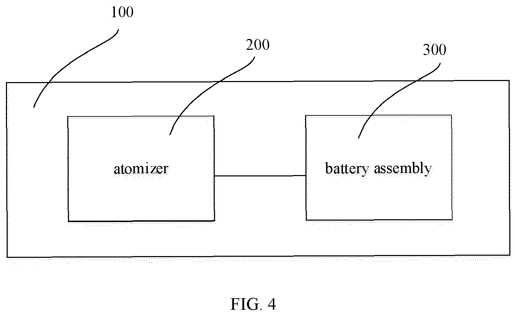

Referring to FIG. 1 and FIG. 2, FIG. 1 is a structural schematic diagram of a first embodiment of a battery assembly according to the present disclosure. The battery assembly 300 (as shown in FIG. 4) shown in the embodiments of the present disclosure is configured for an electronic atomization device 100 (as shown in FIG. 4). FIG. 2 is a cross-sectional view of the embodiment of the battery assembly shown in FIG. 1 along an A-A direction. Specifically, the battery assembly 300 includes a cell 11 and a circuit board 10. The circuit board 10 is connected to the cell 11 by a connection element 12. Specifically, the connection element 12 is an electrode lead drawn from the cell 11. In a specific embodiment, an electrode tab is disposed on the cell 11, and a pad is disposed on the circuit board 10. One end of the connection element 12 is connected to the electrode tab so as to connect to the cell 11, and the other end of the connection element 12 is connected to the pad so as to connect to the circuit board 10, such that the cell 11 is electrically connected to the circuit board 10.

Heat transferred from the circuit board 10 to the cell 11 is reduced, such that an ambient temperature of a surface of the cell 11 is lower than a specification temperature, thus a charge speed is not affected. In this case, a heat-insulating structure is arranged around the circuit board 10 of the battery assembly 300 of the present disclosure, such that a heat insulation is formed between the circuit board 10 and the cell 11, thereby reducing the heat transferred from the circuit board 10 to the cell 11. In this case, the ambient temperature of the surface of the cell 11 is lower than the specification temperature, such that the charge speed is not affected. In a specific embodiment, at least two opposite surfaces of the circuit board 10 are covered by the heat-insulating structure. Alternatively, the heat-insulating structure surrounds the circuit board 10 by around an axial direction L of the battery assembly 300.

Specifically, referring to FIG. 2, the battery assembly 300 further includes a bracket 15 and a sealing cover 14, and the bracket 15 and the sealing cover 14 cooperatively form the heat-insulating structure. Specifically, the bracket 15 includes a first accommodating groove 13 and a second accommodating groove 16. The circuit board 10 is located in the first accommodating groove 13, and the cell 11 is located in the second accommodating groove 16. The first accommodating groove 13 is a blind groove or a blind hole. The first accommodating groove 13 includes a bottom wall 131 and an annular sidewall. The annular sidewall includes a first sidewall 132 and a second sidewall 133 disposed opposite to each other. The first sidewall 132 is disposed close to the second accommodating groove 16. The sealing cover 14 covers the first accommodating groove 13 on an opposite side of the bottom wall 131 of the first accommodating groove 13, that is, the sealing cover 14 covers the first accommodating groove 13 on a side of the circuit board 10 away from the bottom wall 131 of the first accommodating groove 13, thereby forming the heat-insulating structure, thus the circuit board 10 is encapsulated in the first accommodating groove 13. Specifically, the sealing cover 14, the bottom wall 131 of the first accommodating groove 13, and the annular sidewall cooperatively form the heat-insulating structure. The heat-insulating structure is disposed around the circuit board 10, so as to wrap the circuit board 10, thereby insulating the circuit board 10 from the cell 11. In this way, the heat transferred from the circuit board 10 to the cell 11 may be reduced, such that the ambient temperature of the surface of the cell 11 is lower than the specification temperature, thus the charge speed is not affected. Further, the sealing cover 14 covers an entire port of the first accommodating groove 13 on the side of the circuit board 10 away from the bottom wall 131 of the first accommodating groove 13, thereby completely insulating the circuit board 10 from the cell 11, such that the heat insulation is formed between the circuit board 10 and the cell 11.

Further, the battery assembly 300 further includes a silicone cover 17. The silicone cover 17 is located in the first accommodating groove 13 and located between the circuit board 10 and the sealing cover 14. The silicone cover 17 may enhance sealability of the heat-insulating structure. The silicone cover 17, the first accommodating groove 13, and the sealing cover 14 cooperatively form the heat-insulating structure, so as to encapsulate the circuit board 10, thereby further preventing the heat generated by the circuit board 10 from being transferred to the cell 11. A size and thickness of the silicone cover 17 are not limited. In an embodiment, the silicone cover 17 covers an entire circuit board 10, and the thickness of the silicone cover 17 is substantially equal to a distance between the circuit board 10 and the sealing cover 14.

Further, a common sidewall is arranged between the first accommodating groove 13 and the second accommodating groove 16. The common sidewall is the first sidewall 132 of the first accommodating groove 13. The common sidewall (the first sidewall 132) defines an opening 18. The opening 18 may be a recess located on the common sidewall. Alternatively, the opening 18 may also be a through hole penetrating through the common sidewall. The connection element 12 is a wire, one end of the wire is electrically connected to the cell 11, and the other end of the wire passes through the opening 18 and is electrically connected to the circuit board 10.

In an embodiment, the heat transferred from the circuit board 10 to the cell 11 is reduced, such that the ambient temperature of the surface of the cell 11 is lower than the specification temperature, thus the charge speed is not affected. In this case, a cross-sectional area of the opening 18 is less than 30% of a cross-sectional area of the cell 11. For example, the cross-sectional area of the opening 18 is less than 15% of the cross-sectional area of the cell 11.

In another embodiment, the heat transferred from the circuit board 10 to the cell 11 is reduced, such that the ambient temperature of the surface of the cell 11 is lower than the specification temperature, thus the charge speed is not affected. In this case, heat produced by part of the circuit board 10 close to the opening 18 is less than heat produced by the other part of the circuit board away from the opening 18, that is, one side of the circuit board 10 which produces a low heat is disposed close to the opening 18, and the other side of the circuit board 10 which produces a high heat is disposed close to the second sidewall 133.

In the battery assembly 300 provided in the embodiments, the heat-insulating structure is cooperatively formed by the bottom wall 131, the first sidewall 132, and the second sidewall 133 of the first accommodating groove 13 in cooperation with the silicone cover 17 and the sealing cover 14, such that the circuit board 10 is half-encapsulated in the first accommodating groove 13. Further, the first sidewall 132 defines the opening 18, the connection element 12 passes through the opening 18 to connect the cell 11 to the circuit board 10. In this way, the heat transferred from the circuit board 10 to the cell 11 may be reduced, such that the ambient temperature of the surface of the cell 11 is lower than the specification temperature, thus the charge speed is not affected.

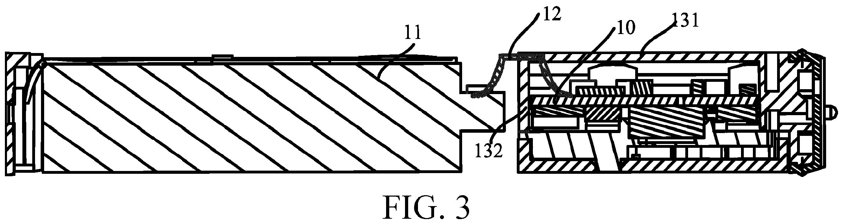

Referring to FIG. 3, FIG. 3 is a cross-sectional view of a second embodiment of the battery assembly shown in FIG. 1 along the A-A direction. A difference between the embodiment shown in FIG. 3 and the embodiment shown in FIG. 2 is that, in the embodiment shown in FIG. 3, the opening 18 is not defined on the first side wall 132 of the first accommodating groove 13. Specifically, a heat-insulating structure is cooperatively formed by the bottom wall 131 of the first accommodating groove 13 and the annular sidewall in cooperation with the silicone cover 17 and the sealing cover 14, such that the circuit board 10 is completely encapsulated in the first accommodating groove 13. In this embodiment, in order to realize the electrical connection between the circuit board 10 and the cell 11, the connection element 12 is a metal dome embedded in a sidewall of the bracket 15. Specifically, as shown in FIG. 3, the connection element 12 may be embedded in the bottom wall 131 of the first accommodating groove 13. Further, the metal dome may be disposed in a wall of the bottom wall 131 of the first accommodating groove 13 by injection molding.

One end of the metal dome extends into the first accommodating groove 13 and is electrically connected to the circuit board 10, and the other end the metal dome extends out of the first accommodating groove 13 and is electrically connected to the cell 11. Specifically, the other end of the metal dome may extend directly into the second accommodating groove 16 and is electrically connected to the cell 11. Alternatively, the other end of the metal dome may extend between the first accommodating groove 13 and the second accommodating groove 16 and is connected to bare electrode tabs of the cell 11, which is not specifically limited herein. Since the metal dome is elastic and a main body of the metal dome is embedded in the sidewall of the bracket 15, an end portion of the metal dome elastically abuts against the electrode tabs of the cell 11 or the pad disposed on the circuit board 10, thereby simplifying an assembly process of the battery assembly 300.

In the battery assembly 300 provided in the embodiments, the heat-insulating structure is cooperatively formed by the bottom wall 131, the first sidewall 132, and the second sidewall 133 of the first accommodating groove 13 in cooperation with the silicone cover 17 and the sealing cover 14, such that the circuit board 10 is completely encapsulated in the first accommodating groove 13. Further, the connection element 12 is the metal dome embedded in the sidewall of the bracket 15, one end of the metal dome extends into the first accommodating groove 13 and is electrically connected to the circuit board 10, and the other end of the metal dome extends out of the first accommodating groove 13 and is electrically connected to the cell 11. In this way, the heat transferred from the circuit board 10 to the cell 11 may be reduced, such that the ambient temperature of a surface of the cell 11 is lower than a specification temperature, thus the charge speed is not affected.

Referring to FIG. 4, FIG. 4 is a structural schematic diagram of an embodiment of an electronic atomization device according to the present disclosure. Specifically, the electronic atomization device 100 includes an atomizer 200 and a battery assembly 300. The battery assembly 300 is configured to power the atomizer 200, and the battery assembly 300 includes the battery assembly 300 described in any one of the foregoing embodiments shown in FIG. 1 to FIG. 3.

The above is only an embodiment of the present disclosure and is not intended to limit the scope of the present disclosure. All equivalent structure or process transformation using the contents of the specification and the accompanying drawings of the present disclosure, or any direct or indirect application in other related technical fields, is equally included in the scope of the present disclosure.

## Claims

1. A battery assembly (300) configured for an electronic atomization device (100), comprising:
a cell (11);
a connection element (12);
a circuit board (10), electrically connected to the cell (11) by the connection element (12); and
**characterized by** further comprising a heat-insulating structure, disposed around the circuit board (10);
wherein the heat-insulating structure is configured to insulate the cell (11) from heat generated by the circuit board (10).

2. The battery assembly (300) according to claim 1, wherein the heat-insulating structure covers at least two opposite surfaces of the circuit board (10), or surrounds the circuit board (10) by around an axial direction (L) of the battery assembly (300).

3. The battery assembly (300) according to claim 2, further comprising: a bracket (15) and a sealing cover (14);
wherein the bracket (15) and the sealing cover (14) cooperatively form the heat-insulating structure.

4. The battery assembly (300) according to claim 3, wherein the bracket (15) comprises a first accommodating groove (13), the circuit board (10) is located in the first accommodating groove (13), and the sealing cover (14) covers the first accommodating groove (13) to form the heat-insulating structure.

5. The battery assembly (300) according to claim 4, wherein the first accommodating groove (13) comprises a blind groove;
the bracket (15) further comprises a second accommodating groove (16) spaced apart from the first accommodating groove (13), and a common sidewall is arranged between the first accommodating groove (13) and the second accommodating groove (16); and
the cell (11) is located in the second accommodating groove (16).

6. The battery assembly (300) according to claim 5, wherein the sealing cover (14) is located on a side of the circuit board (10) away from the bottom of the first accommodating groove (13), and covers an entire port of the first accommodating groove (13), so as to completely insulate the circuit board (10) from the cell (11).

7. The battery assembly (300) according to claim 6, further comprising:
a silicone cover (17), located in the first accommodating groove (13), and located between the circuit board (10) and the sealing cover (14); and
the silicone cover (17), the circuit board (10), and the sealing cover (14) cooperatively form the heat-insulating structure.

8. The battery assembly (300) according to claim 7, wherein the first accommodating groove (13) comprises a bottom wall (131) and an annular sidewall;
wherein the annular sidewall comprises a first sidewall (132) and a second sidewall (133) disposed opposite to each other, and the first sidewall (132) is disposed close to the second accommodating groove (16).

9. The battery assembly (300) according to claim 8, wherein the heat-insulating structure is cooperatively formed by the sealing cover (14), the bottom wall (131), the first sidewall (132), and the second sidewall (133); or
the heat-insulating structure is cooperatively formed by the bottom wall (131), the first sidewall (132), and the second sidewall (133) in cooperation with the silicone cover (17) and the sealing cover (14).

10. The battery assembly (300) according to claim 7, wherein the silicone cover (17) is configured to cover the circuit board (10), and a thickness of the silicone cover (17) is equal to a distance between the circuit board (10) and the sealing cover (14).

11. The battery assembly (300) according to any one of claims 5 to 10, wherein the common sidewall defines an opening (18); and
the connection element (12) is a wire, one end of the wire is electrically connected to the cell (11), and the other end of the wire passes through the opening (18) and is electrically connected to the circuit board (10).

12. The battery assembly (300) according to claim 11, wherein a cross-sectional area of the opening (18) is less than 30% of a cross-sectional area of the cell (11).

13. The battery assembly (300) according to claim 10, wherein heat produced by part of the circuit board (10) close to the opening (18) is less than heat produced by the other part of the circuit board (10) away from the opening (18).

14. The battery assembly (300) according to any one of claims 5 to 10, wherein the connection element (12) is a metal dome embedded in a sidewall of the bracket (15), one end of the metal dome extends into the first accommodating groove (13) and is electrically connected to the circuit board (10), and the other end of the metal dome extends out of the first accommodating groove (13) and is electrically connected to the cell (11).

15. An electronic atomization device (100), comprising:
an atomizer (200); and
**characterized by** further comprising the battery assembly (300) according to any one of claims 1 to 14, configured to power the atomizer (200).
